# EUROPEAN PATENT APPLICATION

(11) **EP 4 575 816 A1**
(43) Date of publication of application: **25.06.2025**
(21) Application number: 23218537.1
(22) Date of filing: 20.12.2023
(51) Int. Cl.: G06F 13/38, G06F 13/40

(54) **SYSTEM COMPRISING A PROCESSOR AND PERIPHERALS**

(71) Applicant: EM Microelectronic-Marin SA, 2074 Marin (CH)
(72) Inventor: Sima, Ovidiu, 8055 Zurich (CH)
(74) Representative: ICB SA

(57) **Abstract**

In one aspect the present invention concerns a system (1) comprising:
- a processor (2),
- a first peripheral (10) and at least a second peripheral (30, 50), wherein each peripheral (10, 30, 50) comprises a first transmission line (11, 31, 51) for data transmission from the processor (2) and a second transmission line (21, 42, 61) for data transmission to the processor (2),
- a first FIFO buffer (12) connected to one of the first transmission line (11) and the second transmission line (21) of the first peripheral (10) via a first FIFO controller (13),
- a second FIFO buffer (14) connected to the same first transmission line (11) and second transmission line (21) of the first peripheral (10) as the first FIFO buffer (12) via a second FIFO controller (15),
- a third FIFO buffer (32) connected to one of the first transmission line (31, 51) and the second transmission line (41, 61) of the at least second peripheral (30, 50) via a third FIFO controller (33),
- a fourth FIFO buffer (34) connected to the same first transmission line (31, 51) and second transmission line (41, 61) of the second peripheral (10) as the third FIFO buffer (32) via a fourth FIFO controller (35), and
- wherein at least one of the first FIFO controller (13) and the second FIFO controller (15) is connectable to at least one of the third FIFO controller (33, 53) and the fourth FIFO controller (43, 63).

## Description

### Field of the invention

In one aspect, the present invention relates to a system comprising a processor and numerous peripherals. In some aspects, the present disclosure relates to a system that is operable to share FIFO buffer resources among numerous peripherals.

### Background

Central processing units or main control logic circuits used in electronic devices are configured for communicating with one or numerals peripherals. Typically, the central processing unit or main control logic circuit comprises a processor connectable or connected to numerous peripherals. Each connection with a peripheral typically comprises a first transmission line for transferring data from the processor to the peripheral and further comprises a second transmission line for transmitting data from the peripheral to the processor.

The first transmission line may be also denoted as a TX transmission line. The second transmission line, e.g. providing a stream of data to the processor may be also denoted as RX transmission line.

Since the processing speed of the numerous peripherals and the processor of the central processing unit or main control logic may differ, there are typically used some buffers in at least one of the first transmission line and the second transmission line. Such buffers may be typically implemented as so-called FIFO (first in first out) buffers, which are configured to store the data received from or to be transmitted to the processor.

Individual peripherals may operate at a comparatively high speed, e.g. for a fast data processing or fast data transfer. The peripherals may also operate at a comparatively low speed for saving power.

When a peripheral is operating at a comparatively high data rate or high speed, a comparatively large FIFO buffer in the respective transmission line would be useful. In situations, where a peripheral is not used or where a peripheral requires only a comparatively low data transmission rate, the respective FIFO buffer may not be required and/or a FIFO buffer of comparatively small size would be sufficient.

In order to save production costs and to reduce chip size, it is generally desirable to provide FIFO buffers with a buffer size as small as possible. However, in situations, where large data transmission rates are required, such comparatively small sized FIFO buffers may be of a particular disadvantage.

It is therefore an aim of the present invention to improve FIFO buffer handling or FIFO buffer control in systems comprising a processor and numerous peripherals. The system should come along with only minor hardware adaptations compared to existing solutions. It is desirable to use available buffer size of numerous FIFO buffers more efficiently.

### Summary of the invention

In one aspect, there is provided a system, typically an electronic system. The system comprises a processor, e.g. in form of a central processing unit or in form of a main control logic circuit. The system further comprises a first peripheral and at least a second peripheral. Each peripheral comprises a first transmission line for data transmission from the processor. Each peripheral further comprises a second transmission line for data transmission to the processor. In some examples, the first transmission line may be implemented as a TX transmission line and the second transmission line may be implemented or provided as a RX transmission line.

The system further comprises a first FIFO buffer connected to one of the first transmission line and the second transmission line of the first peripheral by a first FIFO controller. The system further comprises a second FIFO buffer connected to the same first transmission line and the second transmission line of the first peripheral as the first FIFO buffer via a second FIFO controller. Of course, the first and the second FIFO controller also belong to the system.

In some examples, the first FIFO buffer is connected to the first transmission line via the first FIFO controller. Then, the second FIFO buffer is also connected to the first transmission line via the second FIFO controller. In other examples the first FIFO buffer is connected to the second transmission line via the first FIFO controller. Then, also the second FIFO buffer is connected to the second transmission line via the second FIFO controller.

The system further comprises a third FIFO buffer connected to one of the first transmission line and the second transmission line of the at least second peripheral via a third FIFO controller. There is further provided a fourth FIFO buffer connected to the same first transmission line and the second transmission line of the second peripheral as the third FIFO buffer via a fourth FIFO controller.

In some examples, the third FIFO buffer and the fourth FIFO buffer are connected to the first transmission line of the second peripheral via the third and the fourth FIFO controllers, respectively. In other examples the third FIFO buffer and the fourth FIFO buffer are connected to the second transmission line of the second peripheral via the third FIFO controller and the fourth FIFO controller, respectively.

The system is further characterized in that at least one of the first FIFO controller and the second FIFO controller is connectable to at least one of the third FIFO controller and the fourth FIFO controller. In this way, a FIFO controller of the first peripheral may be connectable to a FIFO controller of another peripheral, e.g. of the second peripheral. By way of interconnecting the first and the third FIFO controllers, the first and the fourth FIFO controllers, the second and the third FIFO controllers or by connecting the second and the fourth FIFO controllers, there can be provided a direct interconnection, e.g. a data transmitting interconnection between FIFO controllers of different peripherals.

In this way, and when e.g. a first peripheral is operated at a comparatively high speed, a FIFO buffer or FIFO buffer resource of another peripheral being inoperable or being operated at a comparatively low speed and having free FIFO resources can be used concurrently in order to provide an effective buffering of a comparatively large data stream.

The third FIFO buffer and the third FIFO controller as well as the fourth FIFO buffer and the fourth FIFO controller may be configured and implemented in the same or like manner compared to the implementation of the first FIFO buffer and the first FIFO controller as well as the second FIFO buffer and the second FIFO controller, respectively.

Writing and reading of the individual FIFO buffers may be controlled by the associated FIFO controllers, respectively. By way of the FIFO controllers a rather controlled and sorted as well as dynamically adaptable reading and writing of individual FIFO buffers can be provided. By way of the individual FIFO controllers, each of which connected with exactly one FIFO buffer, the capacity of the respective FIFO buffers can either be used in and for a transmission line of a peripheral, where the respective FIFO buffer and the FIFO controller is located.

In some scenarios, and when for instance a transmission line provided with the first FIFO buffer and the first FIFO controller is in an idle state or is operating at a comparatively low speed, the data transmission across or along the respective first transmission line may be entirely handled by the second FIFO buffer as controlled by the second FIFO controller. In this way, the first FIFO buffer may be completely free and unused. By way of the first FIFO controller connected to one of the third and the fourth FIFO controllers, the buffer capacity of the first FIFO buffer can be borrowed or at least temporarily provided for data transmission between the processor and the second peripheral or any other peripheral.

Typically, and in some examples FIFO controllers of different peripherals are only connectable if they belong to a common transmission line. In other words, only the FIFO buffers connected to a first transmission line may be interconnected across numerous peripherals. Likewise, only those FIFO controllers belonging or connected to the second transmission line of numerous peripherals may be interconnected. In this way, unintended cross talk between first and second transmission lines can be effectively prevented.

According to a further example, the first FIFO controller is connected to the third FIFO controller. By way of connecting the first FIFO controller to the third FIFO controller, the buffer capacity of the first FIFO buffer can be directly linked or exchanged or provided or added to the buffer capacity of the first FIFO buffer; and vice versa.

According to a further example, the second FIFO controller is connected to the first FIFO controller. The third FIFO controller is connected to the fourth FIFO controller. Typically, first and second FIFO controllers may be directly connected via the first transmission line. Third and fourth FIFO controllers may be directly connected by a first transmission line of the second peripheral. By mutually connecting those FIFO controller is located on or provided on a common transmission line, there can be provided an intra-transmission line buffer capacity exchange.

According to a further example, the second FIFO controller is connectable to the third FIFO controller via the first FIFO controller. This example or embodiment is typically provided when the first FIFO controller is connected to the third FIFO controller and when the first FIFO controller is connected to the second FIFO controller. Here, there may not be a direct communication line or connection between the second FIFO controller and the third FIFO controller. But since the first FIFO controller is directly connected to the second FIFO controller and to the third FIFO controller, there can be provided an indirect data transmitting connection between the second FIFO controller and the third FIFO controller via the first FIFO controller.

Generally, it may be sufficient and even beneficial if only one of two FIFO controllers of a common transmission line is connected or is connectable to a FIFO controller of the same or like transmission line of another peripheral. In this way, modifications to the existing topology may be kept at a minimum and the hardware implementation may not become too complex.

According to another example, the fourth FIFO controller is connectable to the first FIFO controller via the third FIFO controller. Also here, it is the first FIFO controller that is directly connected to the third FIFO controller. The fourth FIFO controller may be directly connected to the third FIFO controller via the first transmission line of the second peripheral. Again, and when the third FIFO controller is directly connected to both, the first FIFO controller and the fourth FIFO controller the data transmission between the first FIFO controller and the fourth FIFO controller may be provided indirectly via the third FIFO controller; and vice versa.

According to a further example, the second FIFO controller is connectable to the fourth FIFO controller. Here, the second FIFO controller may be directly connectable to the fourth FIFO controller.

Then, the second FIFO controller may directly exchange data with the fourth FIFO controller, which data exchange, of course, provides a respective data exchange between the associated second and fourth FIFO buffers.

According to a further example, the system further comprises a fifth FIFO buffer connected to the other one of the first transmission line and the second transmission line of the first peripheral via a fifth FIFO controller. There is further provided a sixth FIFO buffer connected to the same of the first transmission line and second transmission line of the first peripheral as the fifth FIFO buffer via a sixth FIFO controller.

The system further comprises a seventh FIFO buffer connected to the other one of the first transmission line and the second transmission line of the at least second peripheral via a seventh FIFO controller. The system also comprises an eighth FIFO buffer connected to the same first transmission line and second transmission line of the second peripheral as the seventh FIFO buffer via an eighth FIFO controller. At least one of the fifth FIFO controller and the sixth FIFO controller is connectable to at least one of the sevenths FIFO controller and the eighth FIFO controller.

In some examples, the first and the second FIFO buffers and respective FIFO controllers may be connected or associated to a first transmission line of the first peripheral. The third and the fourth FIFO buffers and respective FIFO controllers are connected to a first transmission line of a second peripheral. Here, fifth and sixth FIFO buffers and FIFO controllers may be then connected or coupled to a second transmission line of the first peripheral and seventh and eighth FIFO buffers as well as seventh and eighth FIFO controllers are connected to the second transmission line of the second peripheral.

Typically, the mutual interaction and data transmission scheme between the fifth, the sixth, the seventh and the eighth FIFO buffers and FIFO controllers may correspond directly and/or or may be implemented in the same manner as the connection and data transmission as described above in connection of the first FIFO buffer, the first FIFO controller, the second FIFO buffer, the second FIFO controller, the third FIFO buffer, the third FIFO controller and the fourth FIFO buffer with the fourth FIFO controller.

Insofar, all features, effects and benefits as described above with the first to fourth FIFO buffers and first to fourth FIFO controllers equally applies to the fifth to eighth FIFO buffers and the respective fifth to eighth FIFO controllers; and vice versa.

By providing fifth and sixth FIFO buffers and FIFO controllers in a further transmission line of the first peripheral and by providing seventh and eighth FIFO buffers and FIFO controllers in a respective transmission line of the second peripheral, buffering of a data stream in the first transmission line of first and second peripherals as well as in the second transmission line of first and second peripherals may be conducted in the same or like manner. Hence, the TX transmission line of first and second peripherals as well as the RX transmission line of the first and second peripherals may be likewise and correspondingly equipped with at least two FIFO buffers and two FIFO controllers, respectively.

According to a further example, the fifth FIFO controller is connected to the seventh FIFO controller. Insofar, and by connecting the fifth FIFO controller to the seventh FIFO controller there can be provided and intra-peripheral buffer capacity exchange between the first peripheral and the second peripheral. Likewise, and when the sixth FIFO controller is connected to the eighth FIFO controller, a likewise intra-peripheral buffer capacity exchange can be provided. Here, the fifth FIFO controller may be directly connected to the seventh FIFO controller. Likewise, the sixth FIFO controller may be connected directly to the eighth FIFO controller.

According to another example, the sixth FIFO controller is connectable to the eighth FIFO controller. Hence, there may be provided a direct connection between the sixth FIFO controller and the eighth FIFO controller. In this way, buffer capacity from the sixth FIFO buffer may be dynamically allocated or provided to the eighth FIFO buffer; and vice versa.

In some examples and when e.g. only the fifth FIFO buffer of the second transmission line is connected to the seventh FIFO buffer of the second transmission line of another peripheral, the sixth FIFO controller and hence the sixth FIFO buffer of the second transmission line of the first peripheral may be indirectly connectable to the seventh FIFO controller and hence to the seventh FIFO buffer exclusively via the fifth FIFO controller; and vice versa.

According to a further example, at least one of the first FIFO controller and the second FIFO controller is connectable to at least one of the fourth FIFO controller and the sixth FIFO controller. Here, at least one of the FIFO controllers and the associated FIFO buffers of e.g. a first transmission line of the first peripheral may be connected to FIFO controllers and associated FIFO buffers of a second transmission line of the respective peripheral. In this way, the entire peripheral buffer capacity exchange capacity of the entire system may be further increased and the buffer storage size buffer storage space may be used even more efficiently.

According to a further example, the present system is in no way limited to only a first peripheral and a second peripheral. The system may comprise numerous peripherals, e.g. 3, 4, 5, 6, up to 8 or even more peripherals. Accordingly, the above-described system of inter-peripheral buffer capacity exchange may be likewise expanded to a large number of further peripherals, e.g., a third peripheral, a fourth peripheral and any further peripherals may be implemented in a likewise or identical manner as described above in connection with the first peripheral and the second peripheral.

In order to provide or to implement an inter peripheral buffer capacity exchange, it may be provided that, e.g., the first FIFO controller is connected to a third FIFO controller of a second peripheral and may be further connected to e.g. a further third FIFO controller of a third peripheral. In general, FIFO controllers of a transmission line of a first peripheral may be connected to at least one or numerous FIFO controllers of the first transmission line of all other available peripherals. The same may equally apply to the second FIFO buffer and second FIFO controller as well as to the third and fourth FIFO buffers and third and fourth FIFO controllers, respectively.

According to a further example, at least one of the first FIFO controller and the second FIFO controller is connectable to at least one of the fourth FIFO controller and the sixth FIFO controller. Connecting the first FIFO controller with the fourth FIFO controller and connecting the second FIFO controller with the sixth FIFO controller may provide a further intra-peripheral buffer capacity exchange. Here, available buffer space of FIFO buffers of different transmission lines of one and the same peripheral may share respective storage space. Available hardware resources, e.g. available buffer capacitance, can be used even more efficiently.

According to a further example, the processor is connected to any of the first FIFO buffer and the second FIFO buffer. The processor is further operable to dynamically adjust a buffer size of the first FIFO buffer and a buffer size of the second FIFO buffer. Typically, the processor is connectable to any of the first FIFO buffer and the second FIFO buffer exclusively via the associated FIFO controller. Hence, the first FIFO buffer is accessible by the processor only and exclusively via the first FIFO controller.

Likewise, the second FIFO buffer is exclusively controllable or connectable by or to the processor via the second FIFO controller. Typically, the processor is operable to dynamically adjust a buffer size of the first FIFO buffer and the second FIFO buffer. In this way, the size of FIFO buffers of a common transmission line can be adjusted to the momentary demands of data transmission between the processor and the respective peripheral. If the data transmission between the first peripheral and the processor requires only a moderate data transmission rate, the size of the second FIFO buffer may be temporally decreased at the benefit of the first FIFO buffer.

For the ordinary or normal operation of the first peripheral, there may then be only and exclusively used the second FIFO buffer while the first FIFO buffer with the first FIFO controller may be used by another peripheral. Hence, the free resources of the first FIFO buffer as controlled by the first FIFO controller can be dynamically provided to any other peripheral of the system.

According to a further example, the total buffer size of the first FIFO buffer and the second FIFO buffer, hence the total buffer size of FIFO buffers belonging to a common transmission line is constant. Here, the processor is operable to increase the buffer size of one of the first FIFO buffer and the second FIFO buffer at the expense of the other one of the first FIFO buffer and the second FIFO buffer. Vice versa, the processor is operable to decrease the buffer size of one of the first FIFO buffer and the second FIFO buffer at the benefit of the other one of the first FIFO buffer and the second FIFO buffer.

When the buffer size of the first FIFO buffer is reduced, the buffer size of the second FIFO buffer can be increased by the same amount; and vice versa.

Typically, the first and second FIFO buffers are provided by one and the same hardware component. Hence, the first FIFO buffer and the second FIFO buffer may be implemented as logic FIFO buffers, each of which comprising or defining a well-defined storage space, which is dynamically allocatable and hence dynamically assignable to one of the first and the second FIFO buffers at a time. The processor may be operable, e.g. via the associated FIFO controllers to adjust, e.g. to dynamically adjust, the size of the first and second FIFO buffers.

According to another aspect, the present disclosure or invention also relates to a mobile electronic device. The mobile electronic device comprises a system as described above. The mobile electronic device may comprise one of a mobile phone, a smartwatch and any other wearable mobile electronic device. The mobile electronic device comprises a processor, such as a central processing unit or a main control logic circuit and the mobile electronic device further comprises a first peripheral and a second or further third peripheral as described above in connection with the system configured to exchange FIFO buffer capacitance among different peripherals of the system and hence of such a mobile electronic device.

According to another aspect, the present disclosure further relates to a method of sharing, e.g., of dynamically sharing, buffer resources among multiple FIFO buffers in a system as described above. Hence, the method is typically to be conducted with a system as described above. The method comprises the step of transmitting a data stream between the processor and a first peripheral of the system as described above and buffering a first portion of the data stream in a first FIFO buffer of a first transmission line of the first peripheral and buffering a second portion of the data stream in one of a third FIFO buffer and a fourth FIFO buffer of a first transmission line of another peripheral of the system. Alternatively or additionally, the second portion of the data stream or further portions, e.g. a third portion of the data stream, could be also at least temporally stored in one of the fifth and the sixth FIFO buffer of a second transmission line of the same peripheral or could be stored in one of a seventh and eighth FIFO buffer of a second transmission line of another peripheral of the system.

Since the method as described herein is to be conducted with a system as described above, all features, effects and benefits as described above in connection with the system equally apply to the method of sharing buffer resources among multiple FIFO buffers; and vice versa.

### Brief description of the drawings

In the following numerous examples of the invention will be described in greater detail by making reference to the drawings, in which:
- Fig. 1 is illustrative of a block diagram of an example of the system according to the present invention,
- Fig. 2 shows a flowchart of the method of sharing buffer resources among multiple FIFO buffers.

### Detailed description of the invention

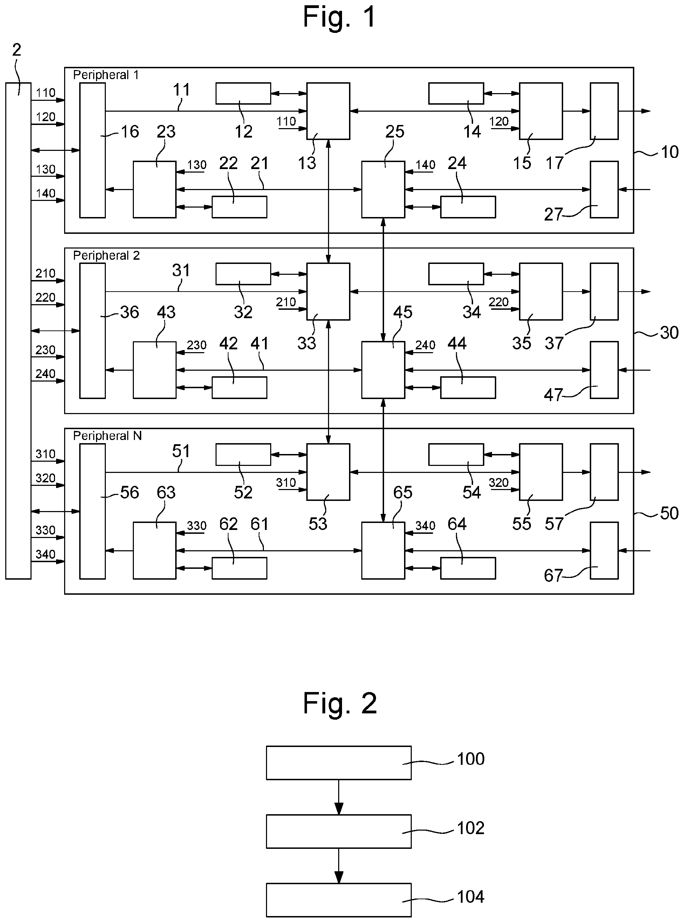

The system 1 as shown in Fig. 1 comprises a central processing unit comprising a processor 2. The system 1 further comprises a first peripheral 10, a second peripheral 30 and a third peripheral 50. The first peripheral 10 comprises a first transmission line 11 for providing data transmission, e.g. TX data transmission from a processor interface 16 to a line interface 17 of the first peripheral 10. There is further provided a second transmission line 21, e.g. implemented as a RX transmission line providing data transmission from a further line interface 27 to the processor interface 16.

The second peripheral 30 and the third peripheral 50 comprises a similar or somewhat identical structure.

In particular, the second peripheral 30 comprises a first transmission line 31 for providing data transmission, e.g. TX data transmission from a processor interface 36 to a line interface 37 of the second peripheral 30. There is further provided a second transmission line 41, e.g. implemented as a RX transmission line providing data transmission from a further line interface 47 to the processor interface 36.

The third peripheral 50 comprises a first transmission line 51 for providing data transmission, e.g. TX data transmission from a processor interface 56 to a line interface 57 of the third peripheral 50. There is further provided a second transmission line 61, e.g. implemented as a RX transmission line providing data transmission from a further line interface 67 to the processor interface 56.

The third peripheral 50 comprises further FIFO controllers 53, 55, e.g. to be regarded as a ninth FIFO controller 53 and as a tenth FIFO controller 55, each of which being connected or integrated into the first transmission line 51 of the third peripheral 50. The third peripheral 50 may further comprise an eleventh FIFO controller 63 and a twelfth FIFO controller 65, each of which connected to or integrated into the second transmission line 61 of the third peripheral 50.

Each FIFO controller 13, 15, 23, 25, 33, 35, 43, 45, 53, 55, 63, 65 is associated or connected with a respective FIFO buffer 12, 14, 22, 24, 32, 34, 42, 44, 52, 54, 62, 64. In other words, each FIFO buffer 12, 14, 22, 24, 32, 34, 42, 44, 52, 54, 62, 64 is exclusively connectable or is exclusively connected to a transmission line 11, 21, 31, 41, 51, 61 by its associated FIFO controller 13, 15, 23, 25, 33, 35, 43, 45, 53, 55, 63, 65.

As further indicated in Fig., each FIFO controller 13, 15, 23, 25, 33, 35, 43, 45, 53, 55, 63, 65 is individually controllable by the processor 2. Hence, the processor 2 is connectable to the first FIFO controller 13 via a control line or connection 110, the second FIFO controller 15 is connectable to the processor 2 via a connection 120. The third FIFO controller 33 is connected to the processor 2 via a connection 210. The fourth FIFO controller 35 is connected to the processor via a connection 220. The fifth FIFO controller 23 is connected to the processor 2 via a connection 130. The sixth FIFO controller 25 is connected to the processor 2 via a connection 140. The seventh FIFO controller 43 is connected to the processor 2 via a connection 230. The eighth FIFO controller 45 is connected to the processor 2 via a connection 240. The nineth FIFO controller 53 is connected to the processor 2 via a connection 310. The tenth FIFO controller 55 is connected to the processor 2 via a connection 320. The eleventh FIFO controller 63 is connected to the processor 2 via a connection 330 and the twelfth FIFO controller 65 is connected to the processor 2 via a connection 340.

This way, each of the FIFO controller 13, 15, 23, 25, 33, 35, 43, 45, 53, 55, 63, 65 is individually controllable by the processor 2.

Specifically, the FIFO controllers 13, 65 are operable to modify the buffer capacity of the associated FIFO buffers 12, 64, respectively.

This allocation or re-allocation of the buffer capacity may be controlled by the processor 2.

Furthermore, at least one of the FIFO controllers 13, 15 of one and the same transmission line 11 of the first peripheral 10 is directly connected to a FIFO controller 33, 35, 53, 55 of a first transmission line 31, 51 of at least one or numerous of the further peripherals 30, 50. As illustrated, the first FIFO controller 13 may be directly connected to the third FIFO controller 33 and may be directly connected to the nineth FIFO controller 53. By way of such a direct inter-peripheral buffer controller connection, there can be exchanged buffer capacitance of the associated FIFO buffers 12, 32, 52 on demand, e.g. in a dynamic manner depending on the current data load or data transmission rates required for this particular peripheral 10, 30, 50.

Likewise, also at least one FIFO controller 25, 45, 65 of a second transmission line 21, 41, 61 of each peripheral 10, 30, 50 or of at least two of the peripherals 10, 30, 50 may be directly connected. In this way, the associated FIFO buffers 24, 44, 64 may dynamically exchange buffer capacitance on demand as required by the respective data transmission rate for each of the peripherals 10, 30, 50.

In some situations, e.g., when there is a comparatively high data transmission rate across the first transmission line 11 or second transmission line 21 of the first peripheral 10, and if there is concurrently a comparatively low data transmission rate in or across the first transmission line 31 and the second transmission line 41 of the second peripheral 30, at least a portion of the FIFO buffer capacitance of the first and second transmission line 31, 41 of the second peripheral can be virtually transferred and hence provided to the buffer capacitance of the first and second transmission lines 11, 21 of the first peripheral 10. Hence, a data stream provided by the processor to the first transmission line 11 may be temporarily stored in the first FIFO buffer 12.

Another portion of the data stream may be stored in the third FIFO buffer 32 or in the further FIFO buffer 52. This way, there can be dynamically provided a comparatively large buffer capacitance and idle buffer capacities, e.g. of transmission lines currently unused or currently requiring only a rather low data transmission rate can be effectively used and provided to other transmission lines requiring a comparatively high data transmission rate at a time.

Insofar, the flowchart of Fig. 2 schematically illustrates the steps of transmitting a data stream between the processor 2 and first peripheral 10 in step 100. In a subsequent step 102 a first portion of this data stream is buffered in a first FIFO buffer 12 of the first transmission line 21 of the first peripheral 10. In step 104 a second portion of the data stream from the processor 2 may be forwarded to at least one of the third FIFO buffer 32, the fourth FIFO buffer 34, the nineth FIFO buffer 52 and the tenth FIFO buffer 54 of first transmission line 31, 51 of at least one of the second or third peripherals 30, 40.

Of course and in the same way as data is temporarily stored in the respective FIFO buffers, the data stream can be output from the respective FIFO buffers to the line interface 17 via data transmission across the FIFO controllers 33 and/or 53. In effect, available hardware capacities of a number of FIFO buffers can be used more effectively and efficiently. Generally available buffer storage capacity can be dynamically swapped and interchanged between different peripherals 10, 30, 50 of such a system 1.

### Nomenclature

- 1: system
- 2: processor
- 10: peripheral
- 11: transmission line
- 12: FIFO buffer
- 13: FIFO controller
- 14: FIFO buffer
- 15: FIFO controller
- 16: processor interface
- 17: line interface
- 21: transmission line
- 22: FIFO buffer
- 23: FIFO controller
- 24: FIFO buffer
- 25: FIFO controller
- 27: line interface
- 30: peripheral
- 31: transmission line
- 32: FIFO buffer
- 33: FIFO controller
- 34: FIFO buffer
- 35: FIFO controller
- 36: processor interface
- 37: line interface
- 41: transmission line
- 42: FIFO buffer
- 43: FIFO controller
- 44: FIFO buffer
- 45: FIFO controller
- 47: line interface
- 50: peripheral
- 51: transmission line
- 52: FIFO buffer
- 53: FIFO controller
- 54: FIFO buffer
- 55: FIFO controller
- 56: processor interface
- 57: line interface
- 61: transmission line
- 62: FIFO buffer
- 63: FIFO controller
- 64: FIFO buffer
- 65: FIFO controller
- 67: line interface

## Claims

1. A system (1) comprising:
- a processor (2),
- a first peripheral (10) and at least a second peripheral (30, 50),
wherein each peripheral (10, 30, 50) comprises a first transmission line (11, 31, 51) for data transmission from the processor (2) and a second transmission line (21, 41, 61) for data transmission to the processor (2),
- a first FIFO buffer (12) connected to one of the first transmission line (11) and the second transmission line (21) of the first peripheral (10) via a first FIFO controller (13),
- a second FIFO buffer (14) connected to the same first transmission line (11) and second transmission line (21) of the first peripheral (10) as the first FIFO buffer (12) via a second FIFO controller (15),
- a third FIFO buffer (32) connected to one of the first transmission line (31, 51) and the second transmission line (41, 61) of the at least second peripheral (30, 50) via a third FIFO controller (33),
- a fourth FIFO buffer (34) connected to the same first transmission line (31, 51) and second transmission line (41, 61) of the second peripheral (10) as the third FIFO buffer (32) via a fourth FIFO controller (35), and
- wherein at least one of the first FIFO controller (13) and the second FIFO controller (15) is connectable to at least one of the third FIFO controller (33, 53) and the fourth FIFO controller (43, 63).

2. The system (1) according to claim 1, wherein the first FIFO controller (13) is connected to the third FIFO controller (33).

3. The system (1) according to claim 1 or 2, wherein the second FIFO controller (15) is connected to the first FIFO controller (13) and wherein the third FIFO controller (33, 53) is connected to the fourth FIFO controller (35, 55).

4. The system (1) according to claim 3, wherein the second FIFO controller (15) is connectable to the third FIFO controller (33) via the first FIFO controller (13).

5. The system (1) according to claim 3 or 4, wherein the fourth FIFO controller (35) is connectable to the first FIFO controller (13) via the third FIFO controller (33).

6. The system (1) according to any one of the preceding claims, wherein the second FIFO controller (15) is connectable to the fourth FIFO controller (35).

7. The system (1) according to any one of the preceding claims, further comprising:
- a fifth FIFO buffer (22) connected to the other one of the first transmission line (11) and the second transmission line (21) of the first peripheral (10) via a fifth FIFO controller (23),
- a sixth FIFO buffer (24) connected to the same first transmission line (11) and second transmission line (21) of the first peripheral (10) as the fifth FIFO buffer (22) via a sixth FIFO controller (25),
- a seventh FIFO buffer (42, 62) connected to the other one of the first transmission line (31, 51) and the second transmission line (41, 61) of the at least second peripheral (30, 50) via a seventh FIFO controller (43, 63),
- an eighth FIFO buffer (44, 64) connected to the same first transmission line (31, 51) and second transmission line (41, 61) of the second peripheral (10) as the seventh FIFO buffer (42) via an eighth FIFO controller (45, 65), and
- wherein at least one of the fifth FIFO controller (23) and the sixth FIFO controller (25) is connectable to at least one of the seventh FIFO controller (43, 43) and the eighth FIFO controller (45, 65).

8. The system (1) according to claim 7, wherein the fifth FIFO controller (23) is connected to the seventh FIFO controller (43, 63).

9. The system (1) according to claim 7 or 8, wherein the sixth FIFO controller (25) is connected to the fifth FIFO controller (23) and wherein the seventh FIFO controller (43) is connected to the eighth FIFO controller (45).

10. The system (1) according to any one of the preceding claims 7 to 9, wherein the sixth FIFO controller (25) is connectable to the eighth FIFO controller (45).

11. The system (1) according to any one of the preceding claims 7 to 10, wherein at least one of the first FIFO controller (13) and the second FIFO controller (15) is connectable to at least one of the fourth FIFO controller (23) and the sixth FIFO controller (25).

12. The system (1) according to any one of the preceding claims, wherein the processor (2) is connected to any of the first FIFO buffer (12) and the second FIFO buffer (14) and wherein the processor (2) is operable to dynamically adjust a buffer size of the first FIFO buffer (12) and the second FIFO buffer (14).

13. The system (1) according to claim 11, wherein the total buffer size of the first FIFO buffer (12) and the second FIFO buffer (14) is constant and wherein the processor (2) is operable to increase the buffer size of one of the first FIFO buffer (12) and the second FIFO buffer (14) at the expense of the other one of the first FIFO buffer (12) and the second FIFO buffer (14).

14. A mobile electronic device comprising a system (1) according to any one of the preceding claims.

15. A method of sharing buffer resources among multiple FIFO buffers (12, 14, 22, 24, 32, 34, 42, 44, 52, 54, 62, 65) in a system (1) according to any one of the preceding claims, comprising the steps of:
- transmitting a data stream between the processor (2) and a first peripheral (10),
- buffering a first portion of the data stream in a first FIFO buffer (12) of a first transmission line (11) of the first peripheral (10), and
- buffering a second portion of the data stream in one of a third FIFO buffer (32) and a fourth FIFO buffer (34) of a first transmission line (31, 51) of another peripheral (30, 50) of the system (1).
